# FASCICULE DE BREVET EUROPEEN

(11) **EP 3 785 575 B1**
(45) Date de publication et mention de la délivrance du brevet: **19.07.2023**
(21) Numéro de dépôt: 19193625.1
(22) Date de dépôt: 26.08.2019
(51) Int. Cl.: A47F 7/02, A47F 7/024, E05B 73/00

(54) **PRÉSENTOIR SÉCURISÉ POUR MONTRES**
GESICHERTER VERKAUFSSTÄNDER FÜR ARMBANDUHREN
SECURE DISPLAY CASE FOR WATCHES

(43) Date de publication de la demande: 03.03.2021
(73) Titulaire: The Swatch Group Research and Development Ltd, 2074 Marin (CH)
(72) Inventeur: LAMONTAGNE, Alexandre, 2036 Cormondrèche (CH); BREGNARD, Jonathan, 2024 St-Aubin-Sauges (CH); NICOLAS, Cédric, 2000 Neuchâtel (CH)
(74) Mandataire: ICB SA

(56) Documents cités:
- WO-A1-01/97661
- WO-A1-02/39856
- WO-A1-2008/122829
- WO-A1-2016/170524

## Description

La présente invention se rapporte aux systèmes de sécurité applicables dans des boutiques de montres de luxe.

### ETAT DE LA TECHNIQUE

Pour protéger les produits exposés dans une boutique, on connaît bien les systèmes antivols de type filaire qui empêchent qu'un produit installé sur un présentoir soit éloigné dudit présentoir. Les systèmes de ce type utilisent un fil entre le produit et le présentoir. Ces systèmes sont capables aussi de gérer la présence des produits sur les présentoirs et en vitrine. Mais ces systèmes sont encombrants, peu esthétiques et nécessitent la mise en place d'une infrastructure électrique ou mécanique câblée.

Le document WO2016170524 A1 divulgue un support de présentation sécurisé pour un produit électronique.

### RÉSUMÉ DE L'INVENTION

La présente invention vise à prévoir un présentoir pour montres qui pallie les inconvénients identifiés ci-dessus. Ce but est atteint par le sujet des revendications attachées.

Le présentoir selon l'invention permet de sécuriser une montre sans que la montre soit liée au présentoir par une connexion à fil. La présence d'une montre sur le présentoir peut être surveillée à distance, par la gestion du signal émis par un appareillage de détection relié au commutateur.

D'autres caractéristiques et avantages de la présente invention apparaîtront dans la description suivante de modes de réalisation préférés, présentés à titre d'exemple non limitatif en référence aux dessins annexés.

### BRÈVE DESCRIPTION DES FIGURES

La figure 1 représente une vue en 3D d'un présentoir selon une forme d'exécution préférée de l'invention.
La figure 2 représente une vue éclatée du présentoir de la figure 1.

### DESCRIPTION DETAILLEE DE L'INVENTION

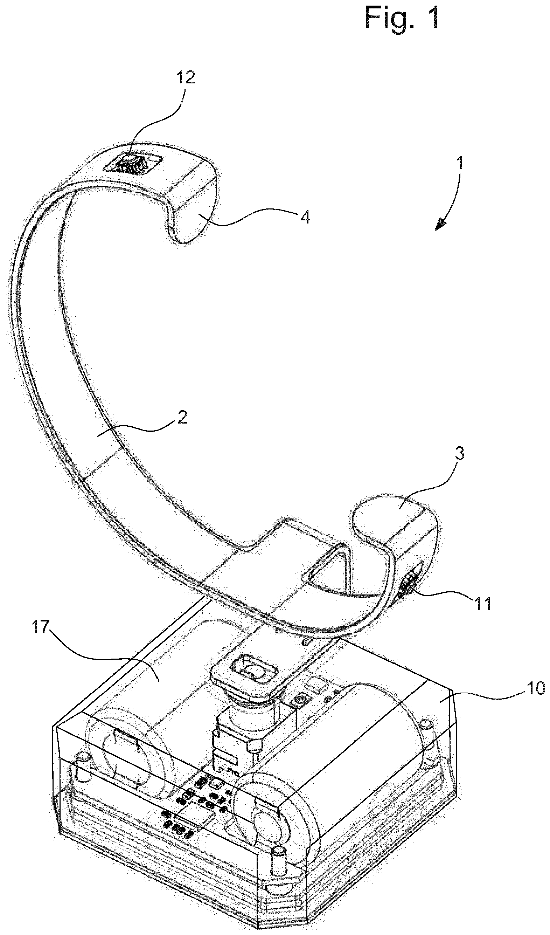

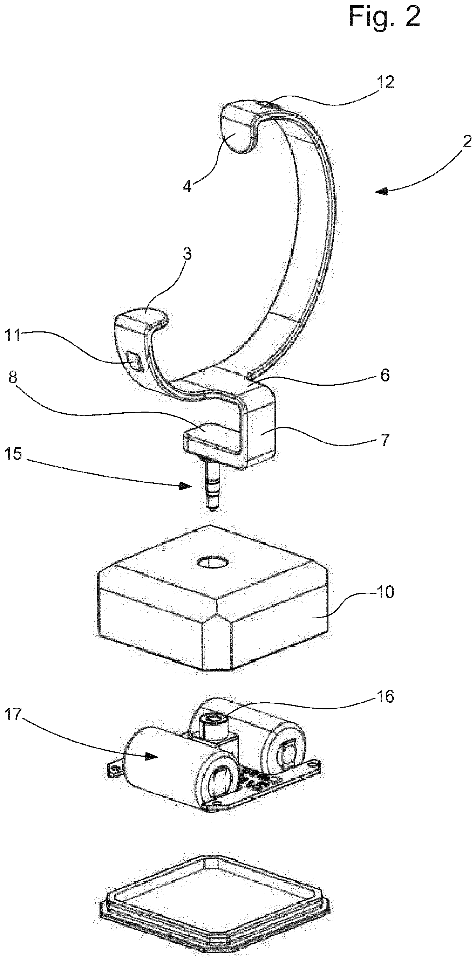

Selon une forme d'exécution préférée de l'invention, représentée aux figures 1 et 2, le présentoir 1 comprend une boucle ouverte 2 formée par une bande plate en un matériau synthétique et rigide tel qu'un polymère moulu. La boucle 2 s'étend entre deux extrémités 3 et 4, sur environ trois quadrants d'un angle de 360°, selon une trajectoire ovale, inclinée vers l'arrière et correspondant essentiellement au pourtour d'un poignet humain, de sorte qu'une montre à bracelet puisse être fermée autour de la boucle 2. Les deux extrémités 3 et 4 sont repliées vers l'intérieur de la boucle 2.

Dans la forme d'exécution illustrée aux figures, la boucle 2 est intégrale avec une partie de support, qui sort du plan de la boucle 2 à la position la plus basse de la boucle, et qui a la forme de trois côtés 6, 7 et 8 d'un rectangle, laissant ouvert un espacement qui permet le passage du bracelet d'une montre. Le côté inférieur 8 du rectangle est supporté par un socle 10 qui supporte ainsi la boucle 2.

Une montre à bracelet peut être montée sur la boucle 2 en positionnant la boîte de la montre environ au milieu de l'espacement entre les deux extrémités 3 et 4, de sorte que la surface inférieure des brins du bracelet est en contact avec la surface supérieure de la boucle 2 quand le bracelet est fermé autour de la boucle par son système de fermeture.

A proximité des extrémités respectives 3 et 4, deux boutons poussoir 11 et 12 sont intégrés dans la boucle 2. Les boutons sortent de la surface supérieure de la boucle 2. Les boutons sont enfoncés par les surfaces inférieures des brins de bracelet, quand la montre est serrée autour de la boucle 2 avec une force normale applicable pour mettre la montre autour du poignet. Les boutons poussoir 11 et 12 agissent sur des commutateurs électriques (non-représentés) intégrés dans la boucle 2 à proximité des boutons 11 et 12. Les commutateurs sont actionnables dans l'un ou l'autre de deux états, dits 'connecté' et 'déconnecté'. Les commutateurs sont configurés tels que l'enfoncement des boutons par ladite force normale met les commutateurs respectifs dans un des deux états. Ensuite, l'enlèvement de la force normale, i.e. l'enlèvement d'une montre du présentoir, change l'état des commutateurs. A cette fin, les boutons poussoirs 11 et 12 sont pourvus de ressorts ou mécanismes équivalents configurés pour que les boutons soient relâchés automatiquement quand la montre est enlevée du présentoir. Des conducteurs électriques (non-représentés) sont intégrés dans la boucle 2 et dans la partie de support 6, 7 et 8, et ces conducteurs relient les commutateurs à un appareillage de détection.

Cet appareillage se trouve à l'intérieur du socle 10 sur lequel la boucle 2 est montée. Dans la forme d'exécution représentée aux figures, les conducteurs électriques intégrés dans la boucle 2 et dans la partie de support 6, 7 et 8 sont reliés à un connecteur 15 du type mini-jack, qui est enfichable dans une prise 16 pourvue dans l'appareillage de détection. Ceci permet de séparer la boucle 2 du socle 10 et de la rebrancher. Selon une alternative, les conducteurs intégrés dans la boucle 2 sont reliés à l'appareillage de détection par une connexion non-détachable.

L'appareillage de détection peut prendre n'importe quelle forme connue dans l'état de la technique, tel qu'un circuit électronique et une ou plusieurs batteries 17 qui alimentent le circuit, le circuit étant relié à la prise 16 à laquelle le mini-jack 15 est connectable. L'appareillage de détection est configuré pour détecter l'état des commutateurs et pour générer un signal qui est lié à l'état détecté. De plus, l'appareillage est configuré pour transmettre ce signal à un système d'alerte à l'extérieur de l'appareillage, et connecté à celui-ci par une connexion à fil ou sans fil.

Le circuit, qui relie les commutateurs à l'appareillage de détection, est réalisable de plusieurs façons. Par exemple, les deux commutateurs peuvent être couplés en série, faisant partie d'un circuit simple alimenté par la batterie de l'appareillage de détection, de sorte que la déconnexion d'au moins un commutateur, i.e. le relâchement d'un moins un bouton poussoir 11 ou 12, coupe l'alimentation ou génère une interruption. Cette interruption sera détectée par l'appareillage de détection, qui transmet un signal représentatif de l'état des commutateurs en cas d'interruption de l'alimentation. Le système d'alerte reçoit ce signal et peut déclencher une alerte. D'autres configurations plus complexes sont envisageables par l'homme de l'art sans sortir de la portée des revendications annexées.

La forme d'exécution représentée dans les figures, qui est pourvue de la connexion détachable entre la boucle 2 et le socle 10 est de préférence configurée tel que le débranchement de ladite connexion, i.e. l'enlèvement du mini-jack 15, est détecté par l'appareillage de détection et transmis sous la forme d'un signal spécifique et reconnaissable par le système d'alerte.

D'autres variantes techniques ressortent sous la portée des revendications.

La boucle ouverte 2 telle que décrite ci-dessus et représentée aux figures peut être fabriquée en un matériau rigide, mais qui permet une déformation élastique de la boucle elle-même, quand les extrémités 3 et 4 sont rapprochées l'une de l'autre. Ceci permet d'augmenter la force de contact entre la boucle 2 et les brins de bracelet d'une montre serrée sur la boucle, augmentant ainsi la force de compression des boutons poussoir 11 et 12.

Le système d'alerte peut comporter un dispositif récepteur du signal lié aux états des commutateurs et émis par l'appareillage de détection, tel qu'un ordinateur connecté au présentoir par une connexion à fil ou sans fil.

Selon une forme d'exécution, l'appareillage de détection à l'intérieur du socle comprend une puce à transmission locale, telle qu'une puce BLE (Bluetooth Low Energy), qui est capable d'envoyer un signal qui est recevable par un ou plusieurs dispositifs récepteurs, tels que les téléphones portables (smartphone) ou tablettes se trouvant dans un périmètre défini autour de la puce. La technologie BLE permet l'envoi depuis la puce d'une séquence de données appelée trame d'annonce ou publicitaire ("advertising" en terminologie anglaise) de manière continue. Les trames consécutives peuvent être encodées à l'aide d'un identifiant qui identifie le produit sécurisé par un code et qui correspond à l'état des boutons, et donc des commutateurs. L'envoi en continu de ces trames publicitaires permet aux personnes responsables de gérer en continu la présence de plusieurs montres sur un nombre de présentoirs. Quand une montre est enlevée par une personne non-autorisée, ce changement sera tout de suite représenté dans les trames publicitaires et signalé sur les téléphones portables ou tablettes sous la forme d'un signal auditif d'alerte par exemple. Les téléphones portables sont munis d'une application numérique qui gère la communication avec les présentoirs et qui va indiquer à l'utilisateur un identifiant de la montre qui a été enlevée, de sorte que l'utilisateur puisse aller vérifier le présentoir en question.

## Revendications

1. Présentoir (1) pour au moins une montre, le présentoir comprenant une boucle de support (2) ouverte, et configurée pour supporter une montre à bracelet quand le bracelet est fermé autour de la boucle (2), la boucle comprenant au moins un commutateur électrique qui est actionnable en l'un ou l'autre de deux états par au moins deux boutons poussoir (11, 12) intégrés dans la boucle de support (2), et dans lequel l'état du commutateur est déterminé en fonction de la présence ou l'absence de la montre autour de la boucle (2), permettant de gérer la présence de la montre sur le présentoir (1), chaque bouton poussoir étant configuré pour être enfoncé par une pression exercée par la montre quand la montre est présente autour de la boucle, et relâcher automatiquement quand la montre est enlevée de la boucle (2), la boucle est une boucle ouverte (2) formée par une bande plate en un matériau essentiellement rigide, un espacement angulaire étant formé entre les extrémités (3, 4) de la boucle (2), **caractérisé en ce que** chaque bouton poussoir (11, 12) est positionné à proximité de chacune des extrémités (3, 4).

2. Présentoir (1) selon la revendication 1, dans lequel la boucle (2) est compressible de manière élastique en rapprochant les extrémités (3,4) l'une par rapport à l'autre.

3. Présentoir (1) selon l'une quelconque des revendications précédentes, comprenant un socle (10) sur lequel la boucle de support (2) est montée, et dans lequel le socle (10) comprend un appareillage de détection lié par un circuit électrique audit au moins un commutateur, et configuré pour détecter l'état du au moins un commutateur et pour générer et transmettre un signal lié à l'état détecté.

4. Présentoir (1) selon la revendication 3, dans lequel la boucle (2) est déconnectable du socle (10) et reconnectable au socle (10) par un raccord électrique enfichable (15, 16).

5. Présentoir (1) selon la revendication 3 ou 4, dans lequel l'appareillage de détection comprend une puce électronique configurée pour transmettre un signal qui n'est recevable que dans un périmètre local paramétrable et défini autour de la puce.

## Patentansprüche

1. Verkaufsständer (1) für mindestens eine Uhr, wobei der Verkaufsständer eine offene Halteschlaufe (2) umfasst und die dazu ausgelegt ist, eine Armbanduhr zu halten, wenn das Armband um die Schlaufe (2) geschlossen ist, wobei die Schlaufe mindestens einen elektrischen Schalter umfasst, der in den einen oder den anderen von zwei Zuständen durch mindestens zwei Druckknöpfe (11, 12) betätigbar ist, die in die Halteschlaufe (2) integriert sind, und wobei der Zustand des Schalters in Abhängigkeit von der Anwesenheit oder der Abwesenheit der Uhr um die Schlaufe (2) bestimmt ist, was erlaubt, die Anwesenheit der Uhr auf dem Verkaufsständer (1) zu verwalten, wobei jeder Druckknopf dazu ausgelegt ist, durch einen Druck, ausgeübt durch die Uhr, wenn die Uhr um die Schlaufe anwesend ist, heruntergedrückt zu sein, und sich automatisch zu lösen, wenn die Uhr von der Schlaufe (2) entfernt wird,
wobei die Schlaufe eine offene Schlaufe (2) ist, die von einem flachen Band aus einem im wesentlichen starren Material gebildet ist, wobei ein Winkelabstand zwischen den Enden (3, 4) der Schlaufe (2) gebildet ist, **dadurch gekennzeichnet, dass** jeder Druckknopf (11, 12) in der Nähe von jedem der Enden (3, 4) positioniert ist.

2. Verkaufsständer (1) nach Anspruch 1, wobei die Schlaufe (2) elastisch komprimierbar ist, indem die Enden (3, 4) einander angenähert werden.

3. Verkaufsständer (1) nach einem der vorangehenden Ansprüche, umfassend einen Sockel (10), auf dem die Halteschlaufe (2) angebracht ist, und wobei le Sockel (10) eine Detektionseinrichtung umfasst, die durch einen elektrischen Stromkreis mit dem mindestens einen Schalter verbunden ist und dazu ausgelegt, den Zustand des mindestens einen Schalters zu ermitteln und ein Signal zu erzeugen und zu übertragen, das mit dem ermittelten Zustand verbunden ist.

4. Verkaufsständer (1) nach Anspruch 3, wobei die Schlaufe (2) vom Sockel (10) lösbar und durch einen elektrischen Steckkontakt (15, 16) mit dem Sockel (10) wiederverbindbar ist.

5. Verkaufsständer (1) nach Anspruch 3 oder 4, wobei die Detektionseinrichtung einen elektronischen Chip umfasst, der dazu ausgelegt ist, ein Signal zu übertragen, das nur in einem parametrierbaren lokalen und um den Chip definierten Umkreis empfangbar ist.

## Claims

1. Display stand (1) for at least one watch, the display stand comprising an open support loop (2), and configured to support a wristwatch, when the strap is closed around the loop (2), the loop comprising at least one electrical switch, that can be actuated in one or other of two states by at least two push buttons (11, 12) integrated in the support loop (2), and wherein the state of the switch is determined according to the presence or absence of the watch around the loop (2), making it possible to manage the presence of the watch on the display stand (1), each push button being configured so as to be pressed in by a pressure exerted by the watch, when the watch is present around the loop, and released automatically, when the watch is removed from the loop (2),
the loop is an open loop (2) formed by a flat band made from an essentially rigid material, an angular space being formed between the ends (3, 4) of the loop (2), **characterised in that** each push button (11, 12) is positioned close to each of the ends (3, 4).

2. Display stand (1) according to claim 1, wherein the loop (2) can be compressed elastically by bringing the ends (3, 4) closer to each other.

3. Display stand (1) according to any of the preceding claims, comprising a pedestal (10) on which the support loop (2) is mounted, and wherein the pedestal (10) comprises a detection apparatus connected by an electrical circuit to said at least one switch, and configured to detect the state of the at least one switch and to generate and transmit a signal related to the state detected.

4. Display stand (1) according to claim 3, wherein the loop (2) can be disconnected from the pedestal (10) and reconnected to the pedestal (10) by a plug-in electrical connection (15, 16).

5. Display stand (1) according to claim 3 or 4, wherein the detection apparatus comprises an electronic chip configured to transmit a signal, that can be received only in a local area, that is customizable and defined around the chip.
